# EUROPÄISCHE PATENTANMELDUNG

(11) **EP 2 508 833 A2**
(43) Veröffentlichungstag der Anmeldung: **10.10.2012**
(21) Anmeldenummer: 12154525.5
(22) Anmeldetag: 08.02.2012
(51) Int. Cl.: F28F 3/00, F25B 39/02

(54) **Verdampferplatte für eine Kältemaschine**

(30) Priorität: 05.04.2011 DE 102011001804
(71) Anmelder: Flamm AG, 52078 Aachen (DE)
(72) Erfinder: Flamm, Frieder, 52223 Stolberg (DE)
(74) Vertreter: Kohlmann, Kai

(57) **Zusammenfassung**

Die Erfindung betrifft eine Verdampferplatte für eine Kältemaschine mit zwischen zwei aufeinander liegenden Blechen angeordneten Kältemittelkanälen, wobei die Bleche mittels eines Klebstoffes miteinander verbunden sind.

Um eine betriebssichere Verdampferplatte mit gleich bleibendem Kanalquerschnitt längs der Kältemittelkanäle und reduziertem Energiebedarf zu schaffen, wobei die Kältemittelkanäle frei von Klebstoff sind, wird vorgeschlagen, dass zwischen den Blechen mehrere Abstandshalter angeordnet sind, die einen Spalt mit konstanter Breite zur Aufnahme des Klebstoffs zwischen den Blechen ausbilden und die Breite des Spaltes zwischen 0,01 mm - 0,2 mm beträgt.

Außerdem wird ein Verfahren zur Herstellung einer Verdampferplatte vorgeschlagen.

## Beschreibung

Die Erfindung betrifft eine Verdampferplatte für eine Kältemaschine mit zwischen zwei aufeinander liegenden Blechen angeordneten Kältemittelkanälen, wobei die Bleche mittels eines Klebstoffes miteinander verbunden sind, der beständig gegen Kältemittel ist. Außerdem betrifft die Erfindung ein Verfahren zum Herstellen von derartigen Verdampferplatten.

Verdampferplatten sind ein Bestandteil einer Kältemaschine, in dem das flüssige Kältemittel unter Wärmeaufnahme aus der Umgebung verdampft wird. Kältemaschinen sind ortsfeste oder bewegliche Einrichtungen zur Kühlung von geschlossenen Räumen und von festen, flüssigen oder gasförmigen Körpern auf eine Temperatur unter derjenigen der Umgebung.

Verdampferplatten werden nach dem Stand der Technik hergestellt, indem verzinktes Aluminiumblech zunächst gerichtet und anschließend auf die gewünschte Größe der Verdampferplatte zugeschnitten wird. Auf die zugeschnittenen Bleche wird ein Trennmittel, z.B. Graphit, als Abbild des Kanalverlaufs für das Kältemittel in der Verdampferplatte aufgetragen. Anschließend werden zwei Platten zusammengelegt und unter Wärmezufuhr in einer Heizeinrichtung verpresst, so dass die beiden Bleche verlöten. Sodann werden die nicht verlöteten Kanalbereiche in einem Formwerkzeug beispielsweise mit Stickstoff aufgeblasen.

Darüber hinaus ist aus einem Prospekt der Fa. SHOWA ALUMINIUM CORPORATION, Osaka, Japan - 1993 ein so genanntes Roll-Bond Verfahren bekannt, bei dem die aufeinander liegenden Bleche nicht verlötet, sondern durch Heißwalzen miteinander verschweißt und anschließend auf Enddicke kalt ausgewalzt werden. Die durch das im Siebdruckverfahren aufgetragene Trennmittel von der Verschweißung ausgenommenen Kanalbereiche werden mit Druckluft aufgeblasen, bevor die Bleche in die einzelnen Verdampferplatten unterteilt werden. Nachteilig bei diesem Verfahren ist die Blechdickenänderung beim Heißwalzen und in dem nachgeordneten Kaltwalzschritt, da sie unmittelbar zu entsprechenden Blechlängenänderungen führen. Hieraus resultieren Probleme, die in nachfolgenden Arbeitsschritten zu einem hohen Ausschuss führen.

Eine gattungsgemäße Verdampferplatte sowie ein Verfahren zu deren Herstellung sind aus der EP 1349 726 B1 bekannt. Die die Verdampferplatte bildenden Bleche werden mittels eines Klebstoffes miteinander verbunden. Die Verdampferplatte muss nicht notwendigerweise aus Reinaluminium bestehen und kann dennoch einfach in großer Stückzahl hergestellt werden.

Problematisch bei der Herstellung von geklebten Verdampferplatten ist die Einhaltung einer gleichmäßigen Schichtdicke des Klebstoffs. Abweichungen in der Schichtdicke führen zu unterschiedlichen Kanalquerschnitten längs des Kanalverlaufs. Hieraus resultiert ein höherer Energiebedarf zur Erzeugung der Kälteleistung. Des weiteren hat sich herausgestellt, dass beim Fügen der Bleche Klebstoff in die Kältemittelkanäle gelangen kann, der die Funktion der Verdampferplatte beeinträchtigt.

Ausgehend von diesem Stand der Technik liegt der Erfindung die Aufgabe zu Grunde, eine betriebssichere Verdampferplatte mit zwei verklebten, aufeinander liegenden Blechen mit gleich bleibendem Kanalquerschnitt längs der Kältemittelkanäle und reduziertem Energiebedarf zu schaffen, wobei die Kältemittelkanäle frei von Klebstoff sind.

Außerdem soll ein Verfahren zur Herstellung des Verdampfers angegeben werden.

Diese Aufgabe wird bei einer Verdampferplatte der eingangs erwähnten Art dadurch gelöst, dass zwischen den Blechen mehrere Abstandshalter angeordnet sind, die einen Spalt mit konstanter Breite zur Aufnahme des Klebstoffs zwischen den Blechen ausbilden und die Breite des Spaltes zwischen 0,01 mm - 0,2 mm beträgt.

Die Abstandshalter bewirken die Einhaltung eines Klebespaltes mit konstanter Breite. In dem angegebenen Bereich für die Spaltbreite tritt eine Kapillarwirkung auf, die verhindert, dass der Klebstoff, der zuvor auf die Stegbereiche zwischen den Kanälen zumindest einseitig aufgetragen wurde, nicht in die Kältemittelkanäle gelangt. Der untere Grenzwert für die Schichtdicke des Klebstoffs und damit den Abstand zwischen den Verdampferplatten beträgt 0,01 mm. Bevorzugt beträgt die Breite des Spaltes 0,05 mm.

Der Klebstoff wird vor dem Fügen der Bleche ausschließlich auf solche Bereiche der Bleche aufgebracht, die den zwischen den Blechen ausgebildeten Kanal für das Kältemittel nicht begrenzen. Der Klebstoff kann beispielsweise durch Aufwalzen auf die Bereiche zwischen den Kanälen, im Wege des Siebdrucks oder durch Aufspritzen aufgebracht werden. Der Klebstoff wird entweder auf eines der beiden Bleche oder auf beide Bleche aufgebracht.

Der Klebstoff behält zumindest im Bereich zwischen -30 Grad Celsius und +40 Grad Celsius seine für einen sicheren Betrieb der Verdampferplatte erforderlichen Klebeeigenschaften.

Um Undichtigkeiten zu vermeiden und eine ausreichende Stabilität der Verdampferplatte zu gewährleisten, ist der Spalt vollständig mit Klebstoff ausgefüllt.

Die Abstandshalter sind zwischen den Blechen derart zueinander angeordnet, dass es in Folge des Fügevorgangs der Bleche zwischen den Abstandshaltern nicht zu einer Durchbiegung der dazwischen liegenden Bereiche der Bleche kommt. Die Abstandshalter sind insbesondere regelmäßig verteilt zwischen den Blechen angeordnet.

Eine besonders preiswerte Herstellung der Verdampferplatte wird erreicht, wenn die Abstandshalter einstückig an mindestens einem der beiden Bleche, insbesondere als Einprägungen in dem Blech ausgestaltet sind. Sie lassen sich dann beispielsweise im Wege des Prägens mit einer Presse aus dem ohnehin erforderlichen Blech formen.

Zur optimalen Ausbildung eines gleichmäßigen Spaltes mit möglichst geringer Einschränkung für die Ausbildung der Kältemittelkanäle weisen die Abstandhalter parallel zur Oberfläche der Bleche vorzugsweise einen runden Querschnitt auf.

Je nach Kanalverlauf können zusätzlich oder alternativ auch Abstandhalter vorgesehen sein, die parallel zur Oberfläche der Bleche einen länglich konturierten Querschnitt aufweisen.

Als Klebstoffe kommen insbesondere Einkomponenten- oder Zweikomponenten-Klebstoffe zum Einsatz. Als besonders geeignet haben sich Zweikomponenten-Polyurethan Klebstoffe und Einkomponenten-Epoxydharz-Klebstoffe sowie temperaturabhängige Polyurethan- und Polyamid-Hotmelt Klebstoffe herausgestellt, wobei die Schichtdicke des Klebstoffs und damit die Breites des Spaltes zwischen den Blechen vorzugsweise im Bereich von 0,01 mm bis - 0,2 mm liegt.

Das Fügen der Bleche durch einen Klebstoff erlaubt den Einsatz von Blechen mit Enddicke und Endfestigkeit, was sich vorteilhaft auf die Maßhaltigkeit der Verdampferplatten bei gleichzeitig verringerter Ausschussrate auswirkt. Der Energie-Einsatz ist beim Verkleben gegenüber herkömmlichen Verbindungstechniken erheblich reduziert. Zum flächigen Aufbringen auf die Fügeflächen kann der Klebstoff mit Walzen aufgerollt oder mit einem rakel- oder spachtelähnlichen Werkzeug aufgestrichen werden. Alternativ zum flächigen Auftragen kann der Klebstoff auch in Bahnen aufgespritzt werden, wobei die Menge so dosiert wird, dass nach dem Fügen der zu verklebenden Bleche kein überschüssiger Kleber in die Kältemittelkanäle eindringt. Schließlich kann der Klebstoffauftrag im Siebdruck erfolgen.

Wenn die Kältemittelkanäle im Wege des Kalt-Umformens, insbesondere durch Tiefziehen oder Prägen, eingebracht werden, lässt sich eine hohe Querschnittswiederholgenauigkeit sowie eine flexible Anordnung der Kältemittelkanäle in den aufeinander liegenden Blechen der Verdampferplatte, wahlweise einseitig, beidseitig oder wechselseitig erreichen. Eine weitere Möglichkeit zum Einbringen der Kältemittelkanäle stellt das Hydroforming dar. Darunter versteht man das Umformen metallischer Bleche im geschlossenen Formwerkzeug mittels Innendruck, der durch ein Medium, insbesondere eine Wasser-Öl-Emulsion in das Werkzeug eingebracht wird. Wesentliche Prozessparameter sind dabei der Innendruck, der bei Serienfertigung üblicherweise bis zu 3.000 bar betragen kann. Das Umformen läuft bei Raumtemperatur ab.

Das Einbringen der Kältemittelkanäle durch Tiefziehen, Prägen oder Hydroforming ermöglicht den Einsatz von Aluminiumlegierungen bei der Herstellung von Verdampferplatten anstelle des bisher verwendeten Reinaluminiums. Weist die Aluminiumlegierung eine Zugfestigkeit von mindestens 200 N / mm² auf, lässt sich eine erhebliche Materialeinsparung bei der Herstellung der Verdampferplatten erzielen. Trotz des Einsatzes von Blechen geringerer Dicke lassen sich dieselben Druck- und Berstfestigkeiten der Verdampferplatte erzielen. Geeignete Aluminiumlegierungen sind beispielsweise die nachfolgend genannten Aluminium-Knetlegierungen:
Al Mg 3
Al Mg Si 1 oder
Al Cu Mg 1.

Die vorgenannten Legierungen weisen eine Zugfestigkeit im Bereich von 200 N / mm² bis 250 N / mm² und eine Bruchdehnung von 12 % bis 15 % auf. Der Einsatz dieser Legierungen ermöglicht Blechdicken von weniger als 0,6 mm.

In vorteilhafter Ausgestaltung der Erfindung werden zumindest die zu verklebenden Flächen der Bleche einer mechanischen und / oder thermischen Oberflächenbehandlung unterzogen. Abhängig von der verwendeten Aluminiumlegierung für die Bleche und dem verwendeten Kleber empfiehlt sich eine Oberflächenbehandlung, insbesondere eine chromfreie Beizassivierung für Aluminium, die im Tauch- oder Spritzverfahren aufgebracht wird. Die derart erzeugte Oxydationsschicht vermeidet unkontrollierte Oxydationen der verarbeiteten Bleche. Zusätzlich oder alternativ können weitere mechanische und / oder thermische Oberflächenbehandlungen der zu verklebenden Flächen durchgeführt werden. Mechanische Oberflächenbehandlungen (z.B. Bürsten) entfernen Verschmutzungen und rauen die Oberfläche auf, was sich bei bestimmten Klebstoffen vorteilhaft auf die Festigkeit der Klebeverbindung auswirken kann. Die thermische Oberflächenbehandlung entfettet die Oberfläche.

Je nach den Aushärtebedingungen und der Konsistenz des verwendeten Klebstoffs ist es zweckmäßig, dass die zusammengefügten und auf Verdampferplattengröße geschnittenen Bleche bis zum Erreichen einer Mindestaushärtung des Klebers mechanisch zueinander fixiert werden. Um eine Presse hierfür nicht unvertretbar lange mit einer Verdampferplatte zu blockieren, kann im Presswerkzeug an mehreren auf die Verdampferplattenfläche gleichmäßig verteilten Stellen mittels Durchsetzfügen (Clinchen) eine in der Plattenebene wirksame formschlüssige Verbindung erzeugt werden, die die für die Kleberaushärtung erforderliche Fixierung aufrechterhält. Die auf diese Weise fixierten Verdampferplatten können die Presse sofort wieder verlassen und falls erforderlich einen Aushärteofen durchlaufen oder unter normalen Umgebungsbedingungen bis zur geforderten Kleberendfestigkeit aushärten.

Je nach verwendetem Kleber kann es erforderlich sein, dass die derart mechanisch fixierten Bleche zusätzlich aufeinander gepresst und/oder erwärmt werden. Hierzu werden die Platten mit elastischen Zwischenlagen zu einem Stapel aufeinander gelegt, um dann unter dem Druck einer Presse und/oder gleichzeitiger Temperatureinwirkung die geforderte Zeit auszuhärten.

Nach abgeschlossener Aushärtung schließen sich eine etwaige Nachbearbeitung, wie beispielsweise Stanzen, Biegen, Bördeln und Lackieren, an.

Nachfolgend wird die Erfindung anhand der Figuren näher erläutert. Es zeigen:
- **Figur 1**: eine Fertigungsstraße zur Durchführung des erfindungsgemäßen Verfahrens,
- **Figur 2 a**: eine Aufsicht auf ein Blech 1a einer erfindungsgemäßen Verdampferplatte sowie

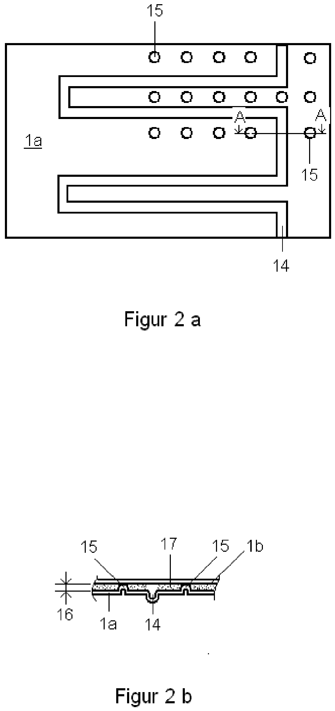

- **Figur 2 b**: einen Schnitt entlang der Linie A-A nach Figur 2a.

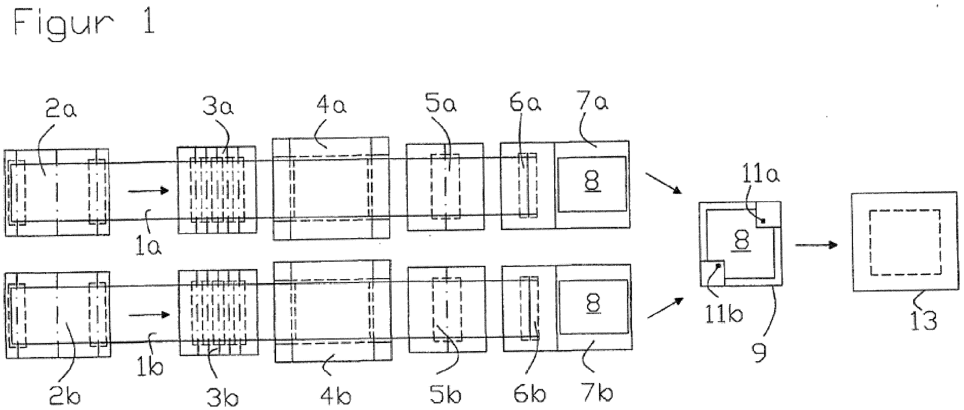

Das Ausführungsbeispiel nach Figur 1 zeigt eine 2-adrige Fertigungsstraße, in der parallel zwei Bleche 1a, 1b bearbeitet werden. Die jeweils von einem Coil 2a, 2b abgehaspelten bandförmigen Bleche 1a, 1b werden nach dem Richten in jeweils einer Rollenrichtmaschine 3a, 3b Prägestationen 4a, 4b zugeführt, die den Kanalverlauf für das Kältemittel in beide Bleche einbringen. In der Prägestation 4a werden außerdem die Abstandshalter in das Blech 1a eingebracht. Die Kältemittelkanäle können auch ausschließlich in eines der beiden Bleche und die Abstandhalter in das andere der beiden Bleche eingeprägt werden. Sofern die Kältemittelkanäle und die Abstandshalter in nur eines der beiden Bleche eingeprägt werden, kann die Prägestation 4b entfallen; in diesem Fall wird ein ebenes Blech mit einem geprägten Blech mit Abstandshaltern und Kältemittelkanal zusammengefügt.

Anschließend erfolgt der Kleberauftrag in beiden Strängen mit jeweils einer oberhalb des Bandlaufs angeordneten Walze 5a, 5b, wobei kein Klebstoffauftrag auf denjenigen Bereichen der Bleche 1a, 1b erfolgt, die nach dem Fügen den Kältemittelkanal begrenzen. Erst nach dem Aufrollen des Klebers werden die bandförmigen Bleche 1a, 1b mit Scheren 6a, 6b in Schneidstationen 7a, 7b auf die Größe der herzustellenden Verdampferplatte 8 abgelängt.

Um eine Produktionseinschränkung durch das Aushärten des Klebstoffs in einer Presse zu vermeiden, werden die in den beiden parallel angeordneten Fertigungsstraßen hergestellten und auf Größe der Verdampferplatte abgelängten Bleche 1a, 1b in einem Presswerkzeug 9 zusammengebracht und an zwei Stellen 11a, 11b mittels Durchsetzfügen (Clinchen) in einer in der Blechebene wirksamen formschlüssigen Verbindung in ihrer Position zueinander fixiert. Dieser Verfahrensschritt ist nicht zwingend erforderlich.

Die so gefügten Verdampferplatten verlassen das Presswerkzeug 9 sofort wieder und gelangen in eine Aushärtestation 13 in der sie chargenweise bis zur geforderten Klebstoffendfestigkeit aushärten. Zwischen den aushärtenden Verdampferplatten 8 befinden sich elastische Zwischenlagen, die eine Beschädigung der ausgeprägten Kühlmittelkanäle in der Aushärtestation 13 verhindern. Wenn die Kapazität der Aushärtestation 13 nicht sämtliche aus den beiden Coils 2a, 2b herstellbaren Verdampfer 8 aufnehmen kann, können zur Sicherung eines kontinuierlichen Produktionsflusses mehrere Aushärtestationen vorgesehen sein.

Der Transport der Bleche 1a, 1b zwischen den Schneidstationen 7a, 7b, dem Presswerkzeug 9 und der Aushärtestation 13 erfolgt vorteilhafter weise automatisch, beispielsweise mittels in den Figuren aus Gründen der Übersichtlichkeit nicht dargestellten Fördermitteln und getakteten Greif- und Hebeeinrichtungen.

Figur 2a zeigt eine Aufsicht auf ein Blech 1a einer Verdampferplatte, in die ein Kältemittelkanal 14 eingeprägt ist. Ein ebenes Blech 1b (vgl. Figur 2b) deckt das Blech 1a mit eingeprägtem Kältemittelkanal 14 ab. Zwischen den Blechen 1a, 1b sind die im Querschnitt kreisförmigen Abstandshalter 15 angeordnet, die der Übersichtlichkeit halber in Figur 2a lediglich teilweise dargestellt sind.

Aus der Schnittdarstellung in Figur 2b entlang der Linie A-A in Figur 2a ist erkennbar, dass die Abstandshalter 15 einstückig mit dem Blech 1a als Einprägungen ausgeführt sind. Sie können daher ebenfalls in der Prägestation 4a hergestellt werden.

Die Anordnung der Abstandshalter 15 zwischen den Blechen 1a, 1b sorgt für einen Spalt mit konstanter Breite 16, der den Klebstoff 17 zwischen den Blechen 1a, 1b aufnimmt. Aus Figur 2b ist erkennbar, dass der durch die Abstandshalter 15 definierte Spalt mit der Breite 16 vollständig von dem Klebstoff 17 ausgefüllt ist. Lediglich die Kältemittelkanäle 14 bleiben aufgrund der durch die Spaltbreite bedingten Kapillarwirkung frei von Klebstoff 17.

### Bezugszeichenliste

| **Nr.** | **Bezeichnung** |
|---|---|
| 1 a, b | Bleche |
| 2 a, b | Coil |
| 3 a, b | Rollenrichtmaschine |
| 4 a, b | Prägestation |
| 5 a, b | Walze |
| 6 a, b | Scheren |
| 7 a, b | Schneidstationen |
| 8 | Verdampferplatte |
| 9 | Presswerkzeug |
| 10 | --------------- |
| 11 a, b | Stellen |
| 12 | - |
| 13 | Aushärtestation |
| 14 | Kätemittelkanal |
| 15 | Abstandshalter 15 |
| 16 | Breite des Spaltes |
| 17 | Klebstoff |

## Patentansprüche

1. Verdampferplatte für eine Kältemaschine mit zwischen zwei aufeinander liegenden Blechen angeordneten Kältemittelkanälen, wobei die Bleche mittels eines Klebstoffes miteinander verbunden sind, der beständig gegen Kältemittel ist, **dadurch gekennzeichnet, dass** zwischen den Blechen (1a, 1b) mehrere Abstandshalter (15) angeordnet sind, die einen Spalt mit konstanter Breite (16) zur Aufnahme des Klebstoffs zwischen den Blechen ausbilden und die Breite des Spaltes zwischen 0,01 mm - 0,2 mm beträgt.

2. Verdampferplatte nach Anspruch 1, **dadurch gekennzeichnet, dass** der Spalt vollständig mit Klebstoff (17) ausgefüllt ist.

3. Verdampferplatte nach Anspruch 1 oder 2, **dadurch gekennzeichnet, dass** die Abstandshalter (15) zwischen den Blechen (1a, 1b) derart zueinander angeordnet sind, dass es durch den Fügevorgang zwischen den Abstandshaltern (15) nicht zu einer Durchbiegung der dazwischen liegenden Bereiche der Bleche (1a, 1b) kommt.

4. Verdampferplatte nach einem der Ansprüche 1 bis 3, **dadurch gekennzeichnet, dass** die Abstandshalter (15) einstückig an mindestens einem der beiden Bleche (1a, 1b) ausgebildet sind.

5. Verdampferplatte nach Anspruch 4, **dadurch gekennzeichnet, dass** die Abstandshalter (15) als Einprägungen in dem Blech (1a, 1b) ausgeführt sind.

6. Verdampferplatte nach einem der Ansprüche 1 bis 5, **dadurch gekennzeichnet, dass** die Abstandhalter (15) parallel zur Oberfläche der Bleche (1a, 1b) einen runden Querschnitt aufweisen.

7. Verdampferplatte nach einem der Ansprüche 1 bis 5, **dadurch gekennzeichnet, dass** die Abstandhalter (15) parallel zur Oberfläche der Bleche (1a, 1b) einen länglich konturierten Querschnitt aufweisen.

8. Verdampferplatte nach einem der Ansprüche 1 bis 7, **dadurch gekennzeichnet, dass** die Klebeflächen der Bleche (1a, 1b) oberflächenbehandelt sind.

9. Verdampferplatte nach einem der Ansprüche 1 bis 8, **dadurch gekennzeichnet, dass** der Klebstoff (17) ein Zweikomponenten-Polyurethan oder ein Einkomponenten-Epoxidharz-Klebstoff ist.

10. Verdampferplatte nach einem der Ansprüche 1 bis 9, **dadurch gekennzeichnet, dass** der Werkstoff der Bleche (1a, 1b) eine Zugfestigkeit von mindestens 200 N / mm² aufweist.

11. Verdampferplatte nach einem der Ansprüche 1 bis 10, **dadurch gekennzeichnet, dass** die Bleche (1a, 1b) kalt umgeformte Kältemittelkanäle (14) aufweisen.

12. Verdampferplatte nach einem der Ansprüche 1 bis 11, **dadurch gekennzeichnet, dass** der Klebstoff (17) zumindest im Bereich zwischen -30 Grad Celsius und +40 Grad Celsius seine für einen sicheren Betrieb der Verdampferplatte erforderlichen Klebeeigenschaften behält.

13. Verfahren zum Herstellen von Verdampferplatten, insbesondere nach den Ansprüchen 1 bis 12, aus zwei aufeinander liegenden Blechen, wobei in wenigstens eines der Bleche der Kanalverlauf für das Kältemittel eingebracht wird, **dadurch gekennzeichnet, dass** zwischen den Blechen (1a, 1b) mit Hilfe mehrerer Abstandshalter (15) ein Spalt mit einer konstanten Breite (16) zwischen 0,01 mm - 0,2 mm zur Aufnahme des Klebstoffs (17) ausgebildet wird und die beiden Bleche (1a, 1b) durch einen Klebstoff (17) gefügt werden, wobei die Menge an Klebstoff (17) so bestimmt wird, dass der Spalt zwischen den Blechen (1a, 1b) ausgefüllt wird.

14. Verfahren nach Anspruch 13, **dadurch gekennzeichnet, dass** der Klebstoff (17) ausschließlich auf Bereichen der Bleche (1a, 1b) aufgebracht wird, die den Kältemittelkanal (14) nicht begrenzen.

15. Verfahren zum Herstellen von Verdampferplatten nach Anspruch 13 oder 14, **dadurch gekennzeichnet, dass** nach einem Richten der zu fügenden Bleche (1a, 1b) der Kanalverlauf für das Kältemittel in wenigstens eines der beiden Bleche (1a, 1b) im Wege des Kaltumformens eingebracht wird.

16. Verfahren zum Herstellen von Verdampferplatten nach einem der Ansprüche 13 bis 15, **dadurch gekennzeichnet, dass** zumindest die zu verklebenden Flächen der Bleche (1a, 1b) einer mechanischen und / oder thermischen Oberflächenbehandlung unterzogen werden.
